(19) Europäisches Patentamt
European Patent Office
Office européen des brevets

(11) **EP 2 182 336 B1**

(12) **EUROPÄISCHE PATENTSCHRIFT**

(45) Veröffentlichungstag und Bekanntmachung des Hinweises auf die Patenterteilung:
**13.01.2016 Patentblatt 2016/02**

(51) Int Cl.:
**G01K 17/00** (2006.01)  **G01K 17/06** (2006.01)
**F24D 19/10** (2006.01)

(21) Anmeldenummer: **09013812.4**

(22) Anmeldetag: **03.11.2009**

(54) **Verfahren zur Bereitstellung von vergleichsdaten für eine energetische bewertung eines Gebäudes**

Method for providing comparative data for an energy evaluation of a building

Procédé de préparation de données de comparaison pour une évaluation énergétique d'un bâtiment

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **03.11.2008 DE 102008054301**

(43) Veröffentlichungstag der Anmeldung:
**05.05.2010 Patentblatt 2010/18**

(73) Patentinhaber: **METRONA WÄRMEMESSER UNION GMBH**
**81379 München (DE)**

(72) Erfinder:
• **Heckmann, Dieter**
  **81475 München (DE)**
• **Papert, Olaf**
  **94469 Deggendorf (DE)**
• **Schröder, Franz**
  **82054 Sauerlach (DE)**

(74) Vertreter: **Prinz & Partner mbB**
**Patent- und Rechtsanwälte**
**Rundfunkplatz 2**
**80335 München (DE)**

(56) Entgegenhaltungen:
**US-A1- 2007 203 860**

• **Anonym: "Ausstellung auf der Grundlage des Energieverbrauchs", EnEV-online: Energieausweis und Energieeinsparverordnung für Gebäude (EnEV). EnEV 2007 - Energieeinsparverordnung für Gebäude, 18. Mai 2008 (2008-05-18), XP002668314, Gefunden im Internet: URL:http://web.archive.org/web/ 20080518031 709/http://www.enev-online.net/ enev_2007/1 9_ausstellung_grundlage_ energieverbrauch.h tm [gefunden am 2012-01-30]**
• **WOLFGANG ORNTH: "Bekanntmachung der Regeln für Energieverbrauchskennwerte im Wohngebäudebestand", 26. Juli 2007 (2007-07-26), XP002668315, * das ganze Dokument ***

EP 2 182 336 B1

**Beschreibung**

Die Erfindung betrifft ein Verfahren zur Bereitstellung von Vergleichsdaten für eine Bewertung energetischer Eigenschaften und/oder Energiekosten eines Gebäudes.

Allgemein aus den steigenden Heizenergiekosten sowie konkret aus der EG-Richtlinie 2002/91/EG, in Deutschland umgesetzt durch die Energieeinsparverordnung (EnEV), ergibt sich die Anforderung an die Wohnungswirtschaft, die Energieeffizienz von Immobilien sowie die nachhaltige Wirksamkeit fortgesetzter energetischer Sanierungstätigkeit sachgerecht zu bewerten. Mit der Einführung des allgemein obligatorischen Energieausweises für Gebäude, die zum Verkauf oder zur Vermietung vorgesehen sind, und der für die Erlangung von Fördermitteln notwendigen energetischen Beurteilung von Gebäudesubstanz hat die systematische und flächendeckende Erhebung von Daten zur Energieeffizienz von Wohngebäuden bereits begonnen. Die entsprechenden Regelungen zur Ausstellung des Energieausweises auf der Grundlage des Energieverbrauchs finden sich in der deutschen Energieeinsparverordnung, abrufbar im Internet zum Beispiel unter http://web.archive.org/web/20080518031709/http:// www.enev-online.net/enev_2007/19_ausstellung_grundlage_energiever brauch.htm.

Wichtige Energieeffizienzdaten sind der gebäudespezifische Energiekonsum und die gebäudespezifischen Energiekosten. Der gebäudespezifische Energiekonsum wird allgemein als Energieverbrauchskennwert (EVK) bezeichnet und gibt den gemessenen Energieverbrauch in Kilowattstunden pro Kalenderjahr und $m^2$ Nutzfläche eines Gebäudes an (Einheit: kWh/m2*a). Unter den spezifischen Energiekosten (EK) ist der Kostenbetrag zu verstehen, der pro Kalenderjahr und $m^2$ Nutzfläche eines Gebäudes anfällt (Einheit: €/m2*a).

Eine Grundanforderung an solche Energieeffizienzdaten, insbesondere an die in den Verbrauchsausweisen (auf der Grundlage des erfassten Energieverbrauchs ausgestellte Energieausweise) angegebenen Energieverbrauchskennwerte, ist deren Vergleichbarkeit. Dazu ist es unter anderem notwendig, die Einflüsse auf den Energieverbrauch, die sich aus dem zeitlichen Witterungsverlauf und aus der geografischen Lage ergeben, in ausreichender Näherung aus den Verbrauchsdaten herauszurechnen (zeitliche Bereinigung und Klimabereinigung).

Diese insgesamt als Witterungsbereinigung bezeichnete Korrektur erfolgt gemäß der "Bekanntmachung der Regeln für Energieverbrauchskennwerte im Wohngebäudebestand" (Deutsches Bundesministerium für Verkehr, Bau und Stadtentwicklung; W. Ornth; Fassung vom 26. Juli 2007) durch die Anwendung eines Klimafaktors auf die Energieverbrauchsdaten eines Abrechnungszeitraums. Der Klimafaktor enthält zum einen das zeitliche Integral der Außentemperaturbedingungen in Form der so genannten Gradtagszahlen (GTZ oder $G_{t20/15}$) nach VDI 2067 Blatt 1, zum anderen das langjährige Mittel des Gradtagszahlenintegrals an einem per Konvention festgelegten geografischen Bezugsort innerhalb Deutschlands nach VDI 3807 (2006). Die Witterungsbereinigung stellt also eine Reduktion oder Normierung der Verbrauchsdaten auf den langjährigen mittleren Witterungsverlauf an einem bestimmten Bezugsort dar. Die Klimafaktoren innerhalb Deutschlands variieren örtlich und zeitlich - begrenzt auf Wohnlagen unter 1000 m über NN - etwa zwischen 0,80 und 1,30, also in einem Intervall von nicht mehr als 50 %.

Diese Art der Witterungsbereinigung hat jedoch Schwächen. So wird der Standort des Gebäudes zunächst anhand der Postleitzahl einer Wetterstation zugeordnet. Üblicherweise ist dies die nächstgelegene hauptamtliche Wetterstation des Deutschen Wetterdienstes. Dieses Netz von Wetterstationen umfasst in der Regel etwa 40 Stationen deutschlandweit. Der für die entsprechende Wetterstation bekannt gegebene Klimafaktor wird dann für die Witterungsbereinigung herangezogen. Dabei bleiben besondere geografische Lagen ebenso wie Höhenlagedifferenzen unberücksichtigt.

Schlechte Witterungsbereinigungen, die sich aus den üblichen Schwächen der Zuordnung zu geeigneten Wetterstationen ergeben können, führen mitunter zu Klimafaktorunter- bzw. -überschätzungen von bis zu 15 %. Die allein durch die angewandten Klimafaktoren bedingte mögliche "Unschärfe" der heute in den Energieausweisen angegebenen Energieverbrauchskennwerte bewegt sich somit in der Größenordnung von etwa +/-10 %.

Unabhängig vom Energieausweis kann der Heizenergieverbrauch eines Gebäudes anhand eines Heizspiegels verglichen und bewertet werden. Heizspiegel sind aufgeschlüsselt nach Art der Heizung (Gas, Öl oder Fernwärme), Form der Warmwasserbereitung (zentral oder dezentral) sowie Größe der Wohnfläche. Sie bieten Haus- und Wohnungseigentümern oder -mietern die Möglichkeit, ihre eigenen Heizkosten zu überprüfen und mit Durchschnittswerten zu vergleichen. Vom Deutschen Mieterbund wird jährlich ein bundesweiter Heizspiegel erstellt, der auf bundesweit erhobenen Heizdaten zentral beheizter Wohngebäude basiert und Vergleichswerte für ein Kalenderjahr liefert. Seit einigen Jahren werden in Deutschland auch kommunale Heizspiegel erstellt, derzeit allerdings nur von etwa 50 größeren Städten.

Die wesentlichen Schwächen der Heizspiegel lassen sich wie folgt zusammenfassen:

- Es wird nicht nach energetischem Sanierungsstand der Gebäude unterschieden.

- Die statistische Basis in den einzelnen Klassen ist gering (begrenzte Datenmenge).

- Für Kommunen ohne kommunalen Heizspiegel kann nur der bundesweite Heizspiegel herangezogen werden, ohne konkrete Berücksichtigung der regionalen klimatischen Lage.

- Selbst "aktuelle" Heizspiegel beziehen sich immer auf zurückliegende Kalenderjahre.

- Es besteht keine Möglichkeit, zeitnah regulierend auf den Energieverbrauch einzuwirken.

- Da die Basis für den Heizspiegel das Kalenderjahr (Januar bis Dezember) ist, die Basis eines Mieters jedoch die Heizkostenabrechnung für die letzten zwölf Monate vor einem willkürlichen Stichtag, ist eine wirkliche Vergleichbarkeit in der Regel nicht gegeben.

Aus der US 2007/203860 A1 ist es im Zusammenhang einer Verbesserung der Abschätzung der zukünftig zu erwartenden Energiekosten einer Wohneinheit bekannt, dass dem Bewohner frühere Abrechnungsdaten für eine Kostenabschätzung zur Verfügung gestellt werden. Diese "historischen" Daten beziehen sich auf denselben Bewohner und dieselbe Wohnung.

Es besteht daher ein Bedarf, einerseits den individuellen Energieverbrauch für einen Abrechnungszeitraum zu erfassen und anderseits dem Nutzer seinen aktuellen Energieverbrauch anzuzeigen und diesen mit aktuellen und besser geeigneten Durchschnittswerten zu vergleichen. Dadurch wird der Nutzer in die Lage versetzt, sein Verbrauchsverhalten richtig einzuschätzen und ggf. zeitnah zu ändern. Aufgabe der Erfindung ist es, diesem Bedarf nachzukommen.

Gelöst wird diese Aufgabe durch ein Verfahren mit den Merkmalen des Anspruchs 1. Vorteilhafte und zweckmäßige Weiterbildungen der Erfindung ergeben sich aus den Unteransprüchen.

Die Erfindung beruht auf der Erkenntnis, dass unter der Voraussetzung, die Witterungseinflüsse auf den Heizenergieverbrauch mit nur wenigen Prozenten Ungenauigkeit abschätzen zu können, die realistische Möglichkeit besteht, jede zu einem beliebigen Zeitpunkt angefallene/erhobene Energieverbrauchsbestimmung und damit angefallene Energieverbrauchskosten innerhalb einer größeren Zeitperiode und an einem beliebigen Ort innerhalb von Deutschland rechnerisch zu normieren, d. h. auf nach Konvention festgelegte Standardbedingungen von geografischer Lage und Witterungsbedingungen zu reduzieren. Dies entspricht der Multiplikation der numerischen Verbrauchswerte mit dem entsprechenden Klimafaktor.

Weitere Merkmale und Vorteile der Erfindung ergeben sich aus der nachfolgenden Beschreibung.

Gemäß der Erfindung werden Vergleichsdaten für eine Bewertung energetischer Eigenschaften und/oder Energiekosten eines Gebäudes bereitgestellt. Die Vergleichsdaten werden aus einer Vielzahl von Verbrauchsdaten generiert, die von Messdienstunternehmen zur Erstellung von Abrechnungen erhoben werden.

Der für die energetische Beurteilung eines bestimmten Gebäudes vorzunehmende Vergleich wird mit einer geeignet gruppierten Teilmenge der Vergleichsdaten vorgenommen, wobei die Vergleichbarkeit der Daten auf zweierlei Weise hergestellt werden kann, wie später noch genauer erläutert wird.

Das erfindungsgemäße Verfahren kann in der Praxis durch Einbeziehung der von Messdienstunternehmen standardmäßig und zyklisch erhobenen Abrechnungsdaten umgesetzt werden. Die Erhebung der Abrechnungsdaten erfolgt durch manuelles Ablesen oder Funkübertragung der Verbrauchsdaten von Heizkostenverteilern und Weiterleitung an eine Verarbeitungseinheit. Die Anhäufung von Abrechnungsdaten über einen großen Teil des Mietwohnungsbestands, ggf. über mehrere aufeinander folgende Abrechnungsperioden, erlaubt es, eine erhebliche Anzahl verwertbarer und vergleichbarer Daten betreffend den spezifischen Energiekonsum und die spezifischen Energiekosten zu generieren. Beispielsweise können über einen Zeitraum von etwa fünf Jahren und einem abzurechnenden Mietwohnungsbestand von etwa 20 Millionen Wohnungen etwa 100 Millionen Energieverbrauchskennwerte bezogen auf einzelne Nutzeinheiten oder zwischen 10 und 20 Millionen Werte für komplette Liegenschaften erhoben werden.

Neben den eigentlichen Abrechnungsdaten können weitere gebäudebezogene Daten erhoben werden, wie etwa eine Aufschlüsselung des Sanierungsstands des Gebäudes nach z. B. folgenden Kriterien: Fassadendämmung nach Baustandard 1995 oder besser, oberste Geschossdecke nach Baustandard 1995 oder besser, Kellerdecke nach Baustandard 1995 oder besser, Einstufung der Isolierverglasung in drei Qualitätsstandards, Anbausituation bezogen auf angrenzende Gebäude, Verhältnis Oberfläche/Volumen des Objekts, etc.

Für eine aktuelle energetische Beurteilung eines einzelnen Wohnobjektes besteht dann die Möglichkeit, aus dem sehr großen Fundus eine statistisch ausreichend große Vergleichsteilmenge zu extrahieren, die dem betrachteten Objekt insbesondere in Größe, Bauausführung, Baujahr, Sanierungsstand, Anlagenausführung und Anzahl der Nutzeinheiten sehr nahe kommt. Es besteht keine Einschränkung mehr auf die rein räumliche und zeitliche Nähe des betrachteten Objekts zu den Vergleichsobjekten.

Für die Durchführung des erfindungsgemäßen Verfahrens wird zunächst eine große statistische Gesamtheit zur Verfügung stehender historischer Wohnungswirtschaftsdaten hinsichtlich der darin enthaltenen Informationen zum spezifischen Energieverbrauch und den angefallenen spezifischen Energiekosten über bestimmte Abrechnungszeiträume, in der Regel 12 Monate, analysiert. Alle Werte aus der Heizkostenabrechnung (Historie und ständige Aktualisierung) werden witterungsbereinigt und nach Clustern geordnet, wofür insbesondere die folgenden Zuordnungskriterien herangezogen werden: energetischer Zustand des Gebäudes, Gebäudegröße nach Wohnfläche und Anzahl der Nutzeinheiten, Stichtag (letzter Tag des Abrechnungszeitraums). Die Festlegung der Cluster erfolgt in einer Weise, dass nach dem Vorbild der konventionellen Heizspiegel zumindest für den Großteil der zu beurteilenden Objekte jeweils eine geeignete Vergleichsteilmenge (Vergleichscluster) zur Verfügung steht. Im Unterschied zu einem konventionellen Heizspiegel basiert der Vergleichscluster jedoch auf einer sehr viel größeren Datenmenge und kann sich auf einen aktuelleren Vergleichszeitraum beziehen (nicht beschränkt auf Kalenderjahre).

Bei der Analyse der Wohnwirtschaftsdaten ist zu beachten, dass sich sowohl der Energieverbrauchskennwert als auch die spezifischen Energiekosten aus einem Anteil, der sich in Abhängigkeit vom Witterungsverlauf entwickelt, und einem Anteil, der in erster Näherung nicht diesem Einfluss unterliegt, zusammensetzen. Beispielsweise ist im Falle des Energieverbrauchskennwerts in der Regel der Energieverbrauch für die Warmwasseraufbereitung enthalten, der unabhängig vom Witterungsverlauf ist. Bei den spezifischen Energiekosten wiederum entfällt ein substantieller Anteil als so genannte Grundkosten auf Anlagenbetrieb und Wartung, und ist somit auch als witterungsunabhängig anzusehen.

Eine wesentliche Voraussetzung für genaue Ergebnisse des Verfahrens ist also zunächst die Abgrenzung der witterungsabhängigen von den witterungsunabhängigen Anteilen:

$$EVK = EVK_{hz} + EVK_{ww}$$

$$EK = EK_{hz} + EK_{sonstige}$$

mit $EVK_{hz}$: witterungsabhängiger Anteil des EVK (insbesondere Heizenergieverbrauch),

$EVK_{ww}$: witterungsunabhängiger Anteil des EVK (insbesondere Energieverbrauch für Warmwasseraufbereitung),

$EK_{hz}$: witterungsabhängiger Anteil der EK (insbesondere Heizkosten),

$EK_{sonstige}$: witterungsunabhängiger Anteil der EK (insbesondere Grundkosten),

wobei die auf die Heizenergie bezogenen Anteile grundsätzlich den substantiell größten Anteil ausmachen.

Wie bereits erwähnt kann der konkrete quantitative Vergleich eines Objekts mit einem Vergleichscluster auf zweierlei Weise erfolgen: entweder werden die Verbrauchsdaten des betrachteten Objekts mit dessen zum Abrechnungsstichtag gültigen Klimafaktor normiert und anschließend mit dem bereits normierten Vergleichscluster verglichen (Normierungsverfahren), oder es werden die numerischen Verbrauchswerte des Vergleichsclusters auf die aktuellen Verbrauchskonditionen des betrachteten Objekts skaliert und mit dessen Verbrauchsdaten verglichen (Rückskalierungsverfahren). Die relativen Verhältnisse des betrachteten Objekts zum Vergleichscluster sind bei beiden Vorgehensweisen identisch. Beide Verfahren werden im Wesentlichen nur auf die witterungsabhängigen Anteile der Energieverbrauchskennwerte und spezifischen Energiekosten angewendet, die witterungsunabhängigen Anteile werden nach erfolgter Normierung bzw. Rückskalierung wieder unverändert hinzuaddiert.

Bei Anwendung des Normierungsverfahrens werden die witterungsabhängigen Verbrauchswerte $EVW_{hz}$ und $EK_{hz}$ zunächst mit ortsbezogenen Koordinaten, z. B. Postleitzahlen, und zeitbezogenen Koordinaten, z. B. dem letzten Tag des Abrechnungszeitraums (Stichtag), logisch verknüpft.

Anschließend werden die Parameter mit einem durch Postleitzahl und Stichtag eindeutig bestimmten Klimafaktor multipliziert. Seit September 2008 kann dabei auf ein erweitertes, differenzierteres Angebot von Klimafaktoren zurückgegriffen werden. Der Deutsche Wetterdienst stellt auf der Basis von insgesamt deutschlandweit rund 400 Wetterstationen und unter Nutzung moderner meteorologischer Methoden für jeden einzelnen Postleitzahl-Zustellungsbezirk speziell ermittelte Klimafaktoren zur Verfügung. Diese Klimafaktorenmatrix ist das Resultat einer umfangreichen Modellrechnung, die als Witterungseinflussfaktoren mindestens die Tagesmitteltemperaturen, die orografische Höhenlage, die geografische Lage in einem 1 x 1 km-Gitternetz über Deutschland sowie einen Gewichtungsfaktor für die Besiedlungsdichte berücksichtigt. Weitere optionale Faktoren können solare Strahlungseinträge, Windgeschwindigkeiten u. ä. meteorologische Parameter sein. Die meteorologischen Parameter werden in das Modell integriert und zwischen den Modellgitterpunkten interpoliert. Die Verwendung dieser Klimafaktoren resultiert in einer deutlich verbesserten Normierung der Verbrauchsdaten auf das per Konvention festgelegte langjährige Witterungsmittel am Standort Würzburg (Bayern). Die energetischen Verbrauchsdaten sind damit bereinigt von witterungsabhängigen Einflüssen.

Die witterungsbereinigten Verbrauchsdaten sind aber noch abhängig vom individuellen Verbrauchsverhalten der Bewohner (1), der Gebäudeart und -größe (2) sowie dem energetischen Sanierungsstand des Objektes (3). Die aufgrund des erfindungsgemäß einbezogenen Datenbestands mögliche Clusterung der statistischen Gesamtheit nach (2) und (3), also in dieser Hinsicht vergleichbarer Objekte, bildet die Grundlage für eine konkrete Beurteilung des individuellen Verbrauchsverhaltens (1). An dieser Stelle können bereits direkte, aussagekräftige Vergleiche von Einzelobjekten mit der statistischen Gesamtheit vorgenommen werden.

Bei Anwendung des Rückskalierungsverfahrens (alternativ zum Normierungsverfahren) erfolgt eine Anpassung oder "Projektion" der verallgemeinerten, normierten Energieverbrauchsdaten auf eine bestimmte geografische Region innerhalb Deutschlands und auf einen bestimmten aktuellen Zeitraum. Hierzu werden die Verbrauchsdaten der statistischen Gesamtheit und/oder einzelner statistischer Vergleichsteilmengen (Vergleichscluster) mit einer Klimafaktorenmatrix, vorzugsweise der oben erwähnten erweiterten Matrix des Deutschen Wetterdienstes, bearbeitet. Die Skalierung besteht konkret darin, alle Verbrauchsdaten durch das (gemäß der geografischen Region und dem aktuellen Zeitraum) eindeutig bestimmte Element der Klimafaktorenmatrix zu dividieren.

Nach der Normierung bzw. Rückskalierung der witterungsabhängigen Energieverbrauchskennwerte und spezifischen Energiekosten werden die witterungsunabhängigen Anteile wieder hinzuaddiert.

Mit dem erfindungsgemäßen Verfahren wird eine direkte Vergleichsmöglichkeit für Objekte geschaffen, für die aktuelle - zunächst nicht witterungsbereinigte - Energieverbrauchskennwerte und spezifische Energiekosten vorliegen, also solche Objekte, die selbst nicht Bestandteil der untersuchten statistischen Gesamtheit sind.

Grundsätzlich ist es - eine ausreichende Datenmenge der statistischen Gesamtheit vorausgesetzt - auch möglich, für eine energetische Beurteilung eines Objektes einen eigens für diese Beurteilung individuell angepassten aktuellen Vergleichscluster zu generieren (dynamische Clusterbildung).

**Patentansprüche**

1. Verfahren zur Bereitstellung von Vergleichsdaten für eine Bewertung energetischer Eigenschaften und/oder Energiekosten eines Gebäudes, wobei Mittel vorgesehen sind, mit denen Abrechnungs- oder Verbrauchsdaten von Messdienstunternehmen erhoben werden, und Mittel vorgesehen sind, mit denen die Vergleichsdaten unter Einbeziehung der von den Messdienstunternehmen erhobenen Abrechnungs- oder Verbrauchsdaten generiert werden, **dadurch gekennzeichnet, dass** Mittel vorgesehen sind, mit denen die Abrechnungsdaten einer Vielzahl von Gebäuden, vorzugsweise über mehrere aufeinander folgende Abrechungsperioden, zu einer statistischen Gesamtheit angehäuft und die Vergleichsdaten aus der statistischen Gesamtheit generiert werden, wobei Mittel vorgesehen sind, mit denen die Vergleichsdaten aus der statistischen Gesamtheit einer Vergleichsteilmenge extrahiert werden, und Mittel vorgesehen sind, mit denen die Vergleichsteilmenge hinsichtlich eines oder mehrerer der folgenden Gebäudemerkmale gebildet wird: energetischer Zustand, Größe nach Wohn- bzw. Nutzfläche, Anzahl der Nutzeinheiten, Bauausführung, Baujahr, Sanierungsstand, Abrechnungsstichtag.

2. Verfahren nach Anspruch 1, **dadurch gekennzeichnet, dass** die Abrechnungs- bzw. Verbrauchsdaten des Gebäudes mit einem zum letzten Abrechnungsstichtag gültigen Klimafaktor normiert werden.

3. Verfahren nach Anspruch 2, **dadurch gekennzeichnet, dass** nur die witterungsabhängigen Verbrauchsdaten normiert werden.

4. Verfahren nach Anspruch 1 oder 2, **dadurch gekennzeichnet, dass** die numerischen Verbrauchsdaten der Vergleichsteilmenge mit einem zum letzten Abrechnungsstichtag gültigen Klimafaktor auf die aktuellen Verbrauchskonditionen des Gebäudes skaliert werden.

5. Verfahren nach Anspruch 4, **dadurch gekennzeichnet, dass** nur die witterungsabhängigen Verbrauchsdaten skaliert werden.

6. Verfahren nach einem der Ansprüche 2 bis 5, **dadurch gekennzeichnet, dass** der Klimafaktor aus einer Klimafaktorenmatrix entnommen wird, die unter Verwendung einer Vielzahl von Wetterstationen und unter Einbeziehung wenigstens der orografischen Höhenlage und/oder der Besiedlungsdichte erstellt wurde.

**Claims**

1. A method of providing comparative data for an assessment of energetic properties and/or energy costs of a building, wherein means are provided by which billing or consumption data is collected by meter reading service companies, and means are provided by which the comparative data is generated incorporating the billing or consumption data collected by the meter reading service companies, **characterized in that** means are provided by which the billing data of a multitude of buildings, preferably over a plurality of successive billing periods, is accumulated to form a statistical universe and the comparative data is generated from the statistical universe, wherein means are provided by which the comparative data is extracted from the statistical universe of a comparative subset, and means are provided by which the comparative subset is formed with regard to one or more of the following building characteristics: energetic state, size according to living space or usable floor space, number of usage units, execution of construction work, year of construction, renovation status, billing cutoff date.

2. The method according to claim 1, **characterized in that** the billing and/or consumption data of the building is normalized with a climatic factor valid at the latest billing cutoff date.

**3.** The method according to claim 2, **characterized in that** only the weather-dependent consumption data is normalized.

**4.** The method according to claim 1 or 2, **characterized in that** the numerical consumption data of the comparative subset is scaled to the current consumption conditions of the building with a climatic factor valid at the latest billing cutoff date.

**5.** The method according to claim 4, **characterized in that** only the weather-dependent consumption data is scaled.

**6.** The method according to any of claims 2 to 5, **characterized in that** the climatic factor is obtained from a matrix of climatic factors which was established using a multitude of weather stations and incorporating at least the orographic altitude and/or the population density.

**Revendications**

**1.** Procédé de mise à disposition de données de comparaison pour une évaluation de propriétés énergétiques et/ou de coûts énergétiques d'un immeuble, des moyens étant prévus à l'aide desquels des données de facturation ou de consommation sont relevées par des compagnies de services de mesure, et des moyens étant prévus à l'aide desquels les données de comparaison sont générées en tenant compte des données de facturation ou de consommation relevées par les compagnies de services de mesure, **caractérisé en ce que** des moyens sont prévus à l'aide desquels les données de facturation d'une pluralité d'immeubles sont accumulées de préférence sur plusieurs périodes de facturation consécutives pour former une population statistique, et les données de comparaison sont générées à partir de la population statistique, des moyens étant prévus à l'aide desquels les données de comparaison sont extraites de la population statistique d'un sous-ensemble de comparaison, et des moyens étant prévus à l'aide desquels le sous-ensemble de comparaison est formé quant à l'une ou plusieurs des caractéristiques d'immeuble suivantes : état énergétique, taille selon la surface habitable ou la surface utile, nombre d'unités d'usage, exécution des travaux, année de construction, état de rénovation, date limite de facturation.

**2.** Procédé selon la revendication 1, **caractérisé en ce que** les données de facturation ou de consommation de l'immeuble sont normalisées avec un facteur climatique valable à la dernière date limite de facturation.

**3.** Procédé selon la revendication 2, **caractérisé en ce que** seules les données de consommation qui dépendent des conditions météorologiques sont normalisées.

**4.** Procédé selon la revendication 1 ou 2, **caractérisé en ce que** les données de consommation numériques du sous-ensemble de comparaison sont cadrées par rapport aux conditions de consommation actuelles de l'immeuble au moyen d'un facteur climatique valable à la dernière date limite de facturation.

**5.** Procédé selon la revendication 4, **caractérisé en ce que** seules les données de consommation qui dépendent des conditions climatiques sont cadrées.

**6.** Procédé selon l'une des revendications 2 à 5, **caractérisé en ce que** le facteur climatique est prélevé sur une matrice de facteurs climatiques établie en utilisant une multitude de stations météorologiques et en tenant compte au moins de l'altitude orographique et/ou de la densité de population.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2007203860 A1

**In der Beschreibung aufgeführte Nicht-Patentliteratur**

- **VERKEHR ; BAU ; STADTENTWICKLUNG ; W. ORNTH.** Bekanntmachung der Regeln für Energieverbrauchskennwerte im Wohngebäudebestand. *Deutsches Bundesministerium,* 26. Juli 2007